(19) Europäisches Patentamt
European Patent Office
Office européen des brevets

(11) **EP 4 736 635 A1**

(12) **EUROPEAN PATENT APPLICATION**

(43) Date of publication:
06.05.2026 Bulletin 2026/19

(21) Application number: 25211719.7

(22) Date of filing: **28.10.2025**

(51) International Patent Classification (IPC):
**A01J 25/15** (2006.01)

(52) Cooperative Patent Classification (CPC):
**A01J 25/15**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.10.2024 DK PA202430656**
**05.11.2024 DK PA202430667**

(71) Applicant: **Primodan A/S**
**4390 Vipperød (DK)**

(72) Inventor: **Knudsen, Claus Theibel**
**4390 Vipperød (DK)**

(74) Representative: **Plougmann Vingtoft a/s**
**Strandvejen 70**
**2900 Hellerup (DK)**

(54) **A CHEESE PRESSING TUNNEL AND A METHOD OF OPERATING THE SAME**

(57) The present invention relates to cheese pressing tunnel (10) comprising a tunnel base (1) having an upper opening (8) and a tunnel cover (5) forming a concave void (9) having a downward facing opening (11). The tunnel cover is arranged on the tunnel base with the downward facing opening facing in a direction of the tunnel base. A flexible and fluid impermeable membrane (2) is arranged to seal the concave void. A first flange (12) is provided on the tunnel base and a second flange (13) is provided on said tunnel cover, where the second flange mates the first flange. A fixation element (3) is arranged between the first and the second flanges, and a rim (14) of the membrane and the fixation element are arranged in a stacked configuration between the first and the second flanges.

See Fig. 3

Fig. 2A

## Description

FIELD OF THE INVENTION

The present invention relates to cheese pressing tunnel comprising a tunnel base having an upper opening and a tunnel cover forming a concave void having a downward facing opening. The tunnel cover is arranged on the tunnel base with the downward facing opening facing in a direction of the tunnel base. A flexible and fluid impermeable membrane is arranged to seal the concave void. A first flange is provided on the tunnel base and a second flange is provided on said tunnel cover, where the second flange mates the first flange. A fixation element is arranged between the first and the second flanges, and a rim of the membrane and the fixation element are arranged in a stacked configuration between the first and the second flanges.

BACKGROUND OF THE INVENTION

Pressing tunnels are widely used in the production of cheese. Such pressing tunnels are configured to exert a pressure onto piston lid being placed on top of freshly produced cheese curd filed into a cheese mould.

The pressure exerted onto the piston lids are in many instances provided by a flexible membrane which deflects towards and abut upper ends of the piston lids. Such a deflection is in many instances provided by applying a pressure difference across the membrane so that an over pressure relative to atmospheric pressure deflects the membrane downwards and into contact with the upper ends of the piston lids.

The membrane may be in the form of an inflatable body. However, this demands a high amount of membrane material to be used and since the membrane is to be formed from blanks of flexible material, such blanks need to a sealed along edges to form an inflatable which is considered a delicate operation often resulting in a less useable inflatable body.

Another approach is to use the membrane to seal a cavity, where deflection of the membrane is provided by pressurization of the cavity. In such approaches, the rim of the membrane needs to be sealingly attached to a rim of the cavity. The rim of the cavity often extends in a single horizontal plane meaning that when the membrane is pressurized, strong forces are generated at the rim resulting in that sealingly attachment fails

When such sealingly attachment fails the pressing tunnel needs to be dismantled and the sealing attachment reestablished. However, in many instances, failure of the sealing attachment results in that the rim of membrane suffers permanent damages not allowing the membrane cannot be reused.

OBJECT OF THE INVENTION

It is an object of the invention to at least mitigate failure of a sealingly attachment of a membrane in a pressing tunnel for cheese production.

In particular, it may be seen as an object of the invention to provide cheese pressing tunnel that solves the above-mentioned problems.

It is a further object of the invention to provide an alternative to the prior art.

SUMMARY OF THE INVENTION

Thus, the above-described objects and several other objects are intended to be obtained in first aspect of the invention by providing cheese pressing tunnel comprising

- a tunnel base having an upper opening and a tunnel cover forming a concave void having a downward facing opening, wherein the tunnel cover is arranged on the tunnel base with the downward facing opening facing in a direction of the tunnel base;
- a flexible and fluid impermeable membrane arranged to seal the concave void so that a pressure difference between an interior of the concave void and an exterior to the concave void results in a deflection of the membrane;
- a first flange on said tunnel base, the first flange encircles the upper opening;
- a second flange on the tunnel cover mating the first flange, the second flange encircles the downward facing opening;
- a fixation element arranged between the first and second flanges;
  wherein
- a rim of the membrane and the fixation element are arranged in a stacked configuration between the first and second flanges.

EPDM rubber as used herein refers to ethylene propylene diene monomer rubber.

By arranging the rim of the membrane and the fixation element in the stacked configuration, the risk of pulling the membrane out of the stacked configuration is greatly improved.

In preferred embodiments, the tunnel cover may be fixed to the tunnel base by a number of threaded bars or bolts. These threaded bolts extend through through-going openings provided in the fixation elements, which maintains the fixation element in between the first and the second flanges. These threaded bars or bolts extend through the second flange and nuts are screwed onto the protruding part of the threaded bars or bolts and tightened to secure the tunnel cover on the tunnel base, with the membrane and fixation element in a firm grip between the first and second flange. In embodiments including a liner, the threaded bars or bolts also extend through through-going opening in the liner and the tightening of the nuts provide that also the liner is in a firm grip between the first and the second flange.

Impermeable as used herein refers to that a fluid such as atmospheric air is prevented from leaking through the membrane.

In preferred embodiments, the flexible and impermeable membrane may be a food grate membrane having a tensile strength between 10 and 15 Kg/cm$^2$, such as between 13.4 and 14.0 Kg/cm$^2$. Preferably the membrane may have an elongation at break % between 550 and 700, such as between 590 and 660. Further, the membrane may have a Hardness Shore A between 55 and 75, such as between 60 and 65.

In a second aspect, the invention relates to a method of operating a cheese pressing tunnel, comprising

• providing a cheese pressing tunnel according to the first aspect of the invention,
• filling a cheese curd into a number of cheese mould each having a piston lid (22),
• introducing the filled cheese mould into the pressing tunnel, and
• pressurizing the concave void so that the membrane exerts a pressure onto the piston lids to press the cheese curd in the cheese moulds and allow liquid to run out from said cheese moulds.

BRIEF DESCRIPTION OF THE FIGURES

The present invention and in particular preferred embodiments thereof will now be described in more detail with regard to the accompanying figures. The figures show ways of implementing the present invention and are not to be construed as being limiting to other possible embodiments falling within the scope of the attached claim set.

Fig. 1 schematically illustrates an embodiment of a cheese pressing tunnel, in a partly exploded view;

Fig. 2A and 2B are cross sectional views of the embodiment of Fig. 1. Fig. 2A illustrates the membrane in non-inflated state and Fig. 2B illustrates the membrane in an inflated state. The lower parts of the cheese pressing tunnel are not drawn (indicated by curved lines) to render the presented views larger. Three cheese moulds 21 with lid pistons 22 are also illustrated in Fig. 2A and 2B.

Fig. 3A schematically illustrates details pertaining to assembly of a cheese pressing tunnel in a preferred embodiment; Fig. 3B is a close-up of Fig. 3A.

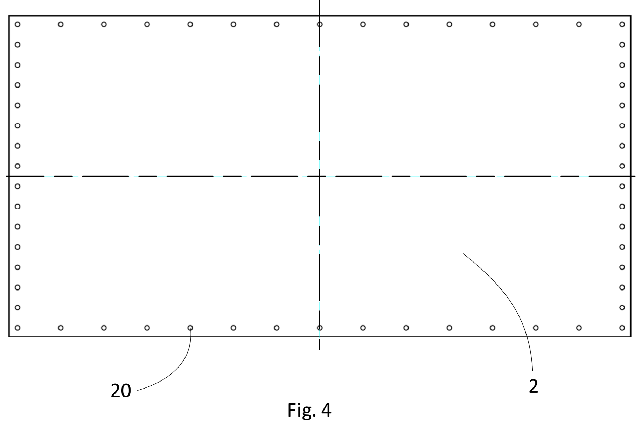

Fig. 4 illustrates in a top-view an embodiment of a membrane 2. In Fig. 4, the two dotted lines indicate lines of symmetry.

Fig. 5A illustrates in a top-view a first embodiment of a fixation element part. Fig. 5B illustrates second embodiment of a fixation element part. Fig. 5C illustrates an assembly detail of two fixation element parts.

DETAILED DESCRIPTION OF PREFERRED EMBODIMENTS

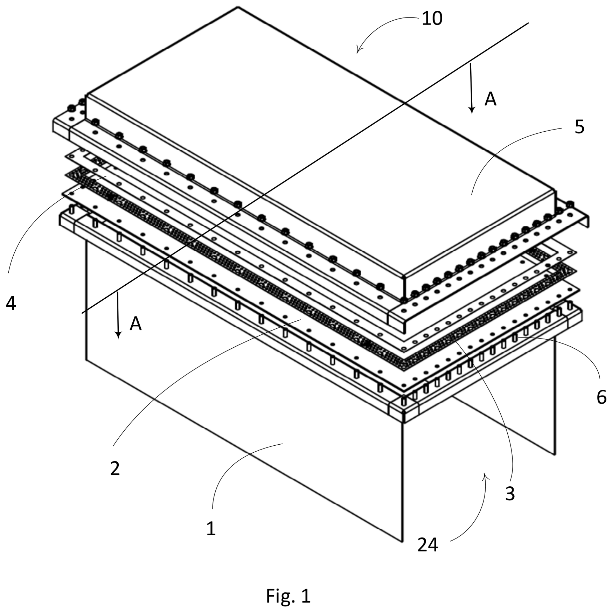

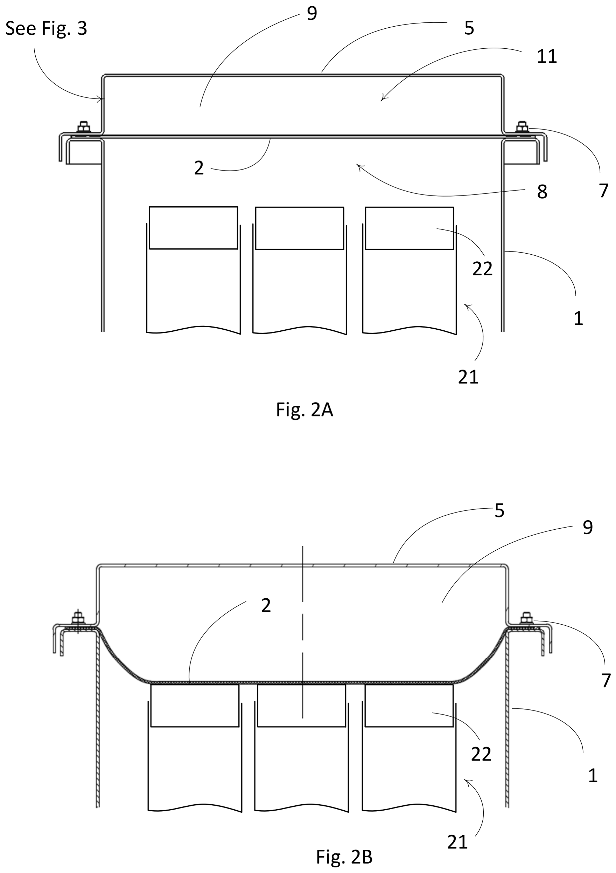

Reference is made to Fig. 1. Illustrating an embodiment of a cheese pressing tunnel 1 in a partly exploded view. A cheese pressing tunnel is typically a tunnel inside which a number of cheese moulds are placed with freshly made cheese curded is arranged for expel of excess liquid. Expel of excess liquid typically occurs through openings in the surface making up e.g. the side and/or bottom of the cheese mould. To enhance expel of liquid, a lid piston is placed at an upper end of the cheese mould and a pressurized flexible and fluid impermeable membrane of the cheese pressing tunnel exerts a pressure on the lid piston 22 (see Fig. 2A) to press excess liquid out of openings in the mould.

In accordance therewith, an embodiment of cheese pressing tunnel 10 has a tunnel base 1 having an upper opening 8. As illustrated in Fig. 1, the tunnel base 1 has two opposite vertical wall elements which at an upper end has a flange encircling the upper opening 8. The tunnel is open-ended at a front and back (in Fig. 1, the open-ended front is seen.

A tunnel cover 5 is arranged to cover the upper opening 8. The tunnel covers is shaped to form a concave void 9 (concave is relatively to the view of Fig. 2A and Fig. 2B) which concave void 9 has a downward facing opening 11 and tunnel cover 5 is arranged on the tunnel base 1 with the downward facing opening facing in a direction of the tunnel base 1. This positioning of the tunnel cover 5 is shown inter alia in Fig. 2A and 2B which are cross sectional views along line A-A of Fig. 1.

The flexible and fluid impermeable membrane 2 is arranged to seal the concave void 9. Hence as the concave void is seal, a pressure difference between an interior of the concave void 9 and an exterior to concave void 9 results in a deflection of said membrane 2. In particular, if the pressure difference is an over pressure, the membrane deflects downwardly into the tunnel base 1, and if the pressure difference is an under pressure, the membrane deflects upwardly into the concave void.

A first flange 12 is provided on the tunnel base 1. The first flange 12 encircles said upper opening 8 and in the illustrated the embodiment first flange has a section protruding horizontally outwardly relatively to the interior of the tunnel base 1.

A second flange 13 is provided on the tunnel cover 5. This second flange 13 mates the first flange 12 so that the second flange 13 can be placed above the first flange 12 and press elements together placed between the two flanges. Accordingly, the second flange 13 encircles the downward facing opening 11, and in the illustrated embodiment, the second flange 13 has a section protruding horizontally as the first flange 12.

The first and the second flanges 12, 13 serve to a fixate the membrane in between the first and second flanges 12, 13. As the membrane is a made from a material having sufficient flexibility to deflect the membrane downwardly to press on the lid piston 22 of the cheese mould 21, a pressurization of the concave void 9 may result in that the membrane is pulled at least partly out of its position between the two flanges.

To mitigate the problem relating to the pressurization has a tendency to pull the membrane out of is position between the two flanges, a fixation element 3 is arranged between the first and second flanges 12, 13. Together with the fixation element 3, a rim 14 of the membrane 2 is arranged in a stacked configuration between the first and second flanges 12, 13. It is noted, that Fig. 1 discloses an optional liner 4, which will be detailed below.

Fig. 2A illustrates the membrane 2 the concave void 9 in a nominal view, that is the membrane being horizontal. A horizontal positioning of the membrane 2 may be difficult or even impossible to achieve due to Hooke's law requiring infinite tensile in the membrane 2 to keep it horizontal under the action of gravity. In preferred embodiments, the pressure in the concave void 9 is reduced to below atmospheric pressure, such as reduced to a pressure of 100mbar which deflects the membrane 2 slightly upwardly into the concave void 9.

Fig. 2B illustrate the deflection of the membrane 2, when the concave void is pressurized. In preferred embodiments, the pressure inside the concave void 9 while the membrane 2 exerts a pressure onto the piston lids 22 is in the region of 0.5 bar above atmospheric pressure. However, other pressures above atmospheric pressure may be used.

In Fig. 2A and 2B, the piston lids 22 are illustrated as extending upwardly to the same height. However, in use the filing level in each mould 21 may vary and/or the cheese curd in each of the moulds 22 may vary. Such variations may result in that the piston lids 22 extends upwardly to different heights. If this occur, the flexibility of the membrane 2 adapts its shape to this so that the pressure exerted on each piston lid 22 will be essentially the same and in the amount of the pressure inside the concave void 9.

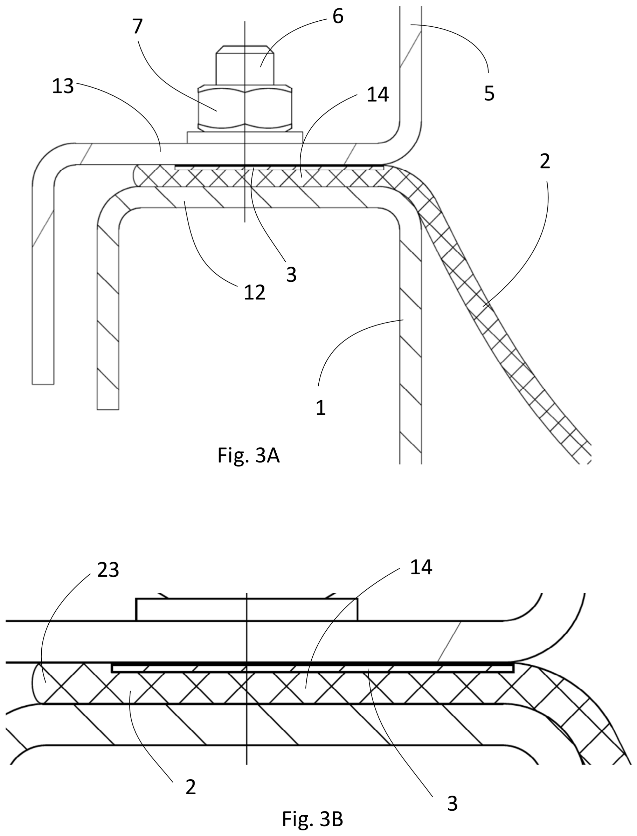

Fig. 3A is a close-up of Fig. 2B illustrating the rim of the membrane 2 and the fixation element arranged in a stacked configuration between the two flanges 12, 13. As perhaps more clearly visible in the further close-up in Fig. 3B, the fixation element 3 is pressed into the membrane 2 whereby the second flange abuts both the fixation element 2 and the membrane 2. As illustrated, the pressing in of the fixation element 2 gives rise to a bead-like shape 23 at the outer end of the rim of the membrane 3. Such a bead-like shape increases the resistance against the membrane 3 being pulled out of is position between the two flanges.

In preferred embodiments, the membrane may have a thickness between 2.0 and 4.0 mm or between 2.5 and 3.5 mm. In a particular preferred embodiment, the membrane has a thickness of substantially 3.0 mm, where substantially refers to the production accuracy by which the membrane can be produced. While the membrane can be made from various flexible material, a particular preferred material for the membrane EPDM rubber. EPDM rubber exhibits good flexibility for cheese pressing tunnels. On the other hand, experiments have shown that a membrane made from EPDM is pulled out from between the two flanges 12, 13 when the concave void 9 is pressurized, if a fixation element 3 is not used.

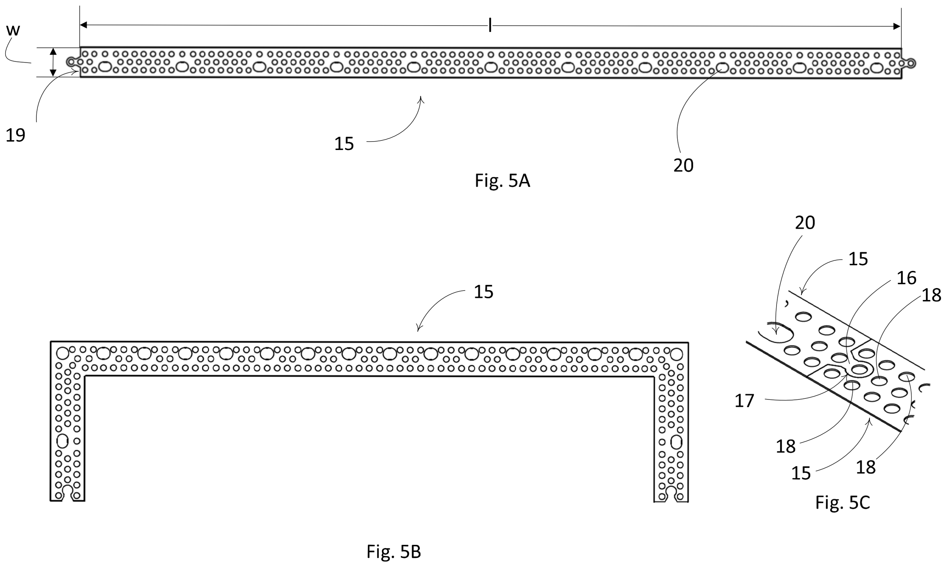

The fixation element 2 is an element which increase the friction in the joint between two flanges 12, 13 and the rim of the membrane 3. An increased friction can be obtained by a surface treatment of the fixation element to provide a surface with a high surface roughness. While a fixation element 2 with a high surface roughness may be useful, the inventors have realized that an effective way of providing a fixation of the flexible membrane 3 is to obtain a friction by a number of through going openings. Hence, in preferred embodiments, the fixation element 3 comprises a plurality of through going openings 18. Such through going openings are disclosed in Figs. 5A-C. When the fixation element 2 is pressed into the membrane 2 as disclosed in connection with Fig. 3B above, the sections of the membrane 2 will extend into the through going openings 18 thereby increasing the fixation element's 3 grip in the rim of the membrane 2. While it is preferred that the fixation element 3 or the fixation element parts 15 (see below) is provided with through-going opening 18, the fixation element 3 or the fixation element parts 15 may be provided with indentations, or a combination of through going openings and indentations. When the fixation element 3 or the fixation element parts are used, the indentations face the membrane 2.

In preferred embodiments, the through going openings 18 are arranged in at least two, such as three, rows 19. In Figs. 5A-C, the through going openings are arranged in three rows and the rows are arranged in a longitudinal direction of the fixation element 3. Here, a longitudinal direction refers to the longer of the two directions in which the surface extends.

The through going openings are preferably cylindrically shaped, however the through going openings may have other shapes such as having an elliptical cross section or stadium shaped cross section.

In preferred embodiments, the fixation element 3 and the fixation element parts 15 are laser cut or stamped out. If burs are produced during the shaping of the fixation element 3 or fixation element parts 15, a flattening process is typically used to remove such burs.

To distribute the deformation of the membrane the through going openings 18 of two of the rows 19 which are next to each other are arranged in a staggered configuration. This is illustrated e.g. in Fig. 5A where centres of the through going openings in an upper and lower row are arranged on imaginary lines perpendicular to the edge of the fixation elements, whereas the centres of the through going openings in the middle row are arranged between the imaginary lines. By this, the stress concentration in the rim of the membrane is distributed more evenly compared with a configuration where the through going opening are arranged in a non-staggered configuration. Such a more evenly stress concentration is suggested to increase the service life of the membrane.

As indicated in Fig. 5A, a fixation element 3 has a width w and a length l, and the width w is preferably smaller than the length l. With reference to Fig. 5B, the length is considered to be the length of the longitudinal centre line.

The fixation element 3 should preferably have a thickness which allow the fixation element 3 to be fully depressed in the membrane 2. In this regard, or in general, the fixation element 3 may have a thickness between 0.25 and 0.75 mm. In preferred embodiments, the fixation element 3 has a thickness of substantially 0.5 mm. Here, substantially refers to the production accuracy by which the fixation element 3 can be produced.

The fixation element 3 may in preferred embodiments be a unitary element in the sense that the fixation element 3 is not divided into separate fixation element parts connected to each other after production. However, this may require that a fixation element 3 is cut-out/-stamped-out from a larger sheet of e.g. metal. In order to be able to produce fixation elements 3 in a modular manner and at the time reduce waste material, the fixation element comprises in preferred embodiments a number of fixation element parts 15 connected to each other to provide said fixation element 3.

Examples on such fixation element parts 15 are illustrated in Figs. 5A-C. By providing a fixation element 3 by fixation element part 15, for instance the length of a certain fixation element 3 can be varied by the number of fixation element parts 15, hence providing fixation elements 3 in a modular manner. The fixation element parts 15 can be produced with limited waste material, as cutting out/stamping out requires only limited material outside the perimeter of the fixation elements. The fixation element parts 15 may be welded or glued together to provide a fixation element 3, although it is preferred to not weld or glue the fixation element parts together.

In preferred embodiments, the fixation element parts 15 comprises mating extensions 16 and notches 17 provided at ends of the fixation elements parts 15. Such extensions 16 and notches 17 are illustrated in Figs. 5A-C. As illustrated in Fig. 5C, an extension 16 fits smoothly inside a mating notch 17. Accordingly, in preferred embodiments, a fixation element is provided by fixation element parts 15 are connected to each other by one of the extensions 16 of one of the fixation element parts 15 is received by one of the notches of another of the fixation element part 15. Such a connection is illustrated in Fig. 5C. The mating extensions 16 and notches 17 preferable engage with each other to provide an interlocking. In embodiments comprising extensions 16 and notches 17, it is preferred not to weld or glue the fixation elements parts 15 together.

The mating extensions 16 and notches 17 may have a number of shapes although it is preferred that the mating extension 16 and notches 17 form jigsaw puzzle like shapes. To enhance modularity, it is generally preferred that extensions all have the same shape and that the notches 17 all have the same shape. In the embodiment of Figs. 5A-C notches 17 are keyhole shaped and said mating extensions 16 fit snugly within the keyholes.

The through going openings 18 are preferably designed so that a grip in the rim of the membrane is increased (relatively to no through going openings 18) while at the same time maintaining a structural integrity of the fixation element 3 and the membrane 2 during use of the cheese pressing tunnel. The through going openings can be quantified as total opening area of the through going openings 19, that is

$$total\ opening\ area = \sum_{i=1}^{n} area\ (i)$$

Where $i$ is the $i^{th}$ through going opening, $n$ is the total number of through going openings and *area (i)* is the area of through going opening $i$. Area refers to the cross-sectional area at the surface of the fixation element facing the membrane.

In preferred embodiments, the total opening area of the through going openings 18 makes up more than 30% and less than 60% of a total face area of the fixation element 3. The total face area is typically the area of the fixation element including the through going openings' area, e.g. for the fixation element of Fig. 5A, the total face area may be calculated as the length multiplied by the width *l*w*.

In many preferred embodiments, all the through going openings 18 are substantially identical to each other and preferably cylindrically shaped.

The fixation element 3 provides a grip on the membrane 3 as disclosed above. While the interface between an upper surface of the fixation element 3 and the lower surface of the second flange 13, optionally in combination with the bead-like shape at the out end of the membrane 3 can provide a sealing, the sealing can be improved by introducing a flexible liner 4 as illustrated in Fig. 1. Such a liner 4 is preferably made from silicone rubber and is arranged in said the stacked configuration at a position above the fixation element 3 and in abutment with the fixation element 3 and with the second flange 13. As the flexible liner is sandwiched between the fixation element 3 and the second 13, flexibility is introduced in the interface between the fixation element 3 and the second flange 13 and this flexibility has shown to improve the sealing of the concave void 9.

The flexible liner 4 may be moulded from liquid silicone rubber or other liquids forming a flexible material when cured or may be cut-out from a sheet of cured silicone rubber or other flexible materials.

In preferred embodiments, the flexible liner 4 has a thickness of 0.5 mm and a width substantially equal to a width of the fixation element 3.

The tunnel cover 5 may be fixed to the tunnel base 1 by a plurality of clamps (not illustrated). While such clamp is a workable solution the tunnel cover 5 is releasably fixed to the tunnel base 1 by a plurality of threaded bars 6. Fig. 1 illustrate an embodiment utilizing threaded bars 6 for releasably fixating the cover 5 to the tunnel base 1. In the illustrated embodiments, the threaded bars 6 are attached to the first flange 12 and proceed upwardly. The second flange has holes through which the threaded bars 6 extends and a nut is arranged on each threaded bar to screw down the tunnel cover 5, as illustrated in Fig. 3A.

The threaded bars 6 are typically welded to the second flange 12 and proceeds upwardly from the second flange 12. In preferred embodiments, the welding may be a two-step welding wherein the threaded bars 6 first is spot welded to the second flange 12, by arranging a threaded bar 6 with a lower end thereof abutting the second flange and provide a high voltage across the threaded bar and the second flange 12. Subsequently, a rim welding is carried at the intersection between the lower end of the threaded bar 6 and second flange 12 to increase the mechanical strength of the welding.

To allow for the threaded bar to pass through the membrane 2, the fixation element 3 and, when used, the liner 4, these elements comprise threaded bar openings 20 to allow the threaded bars 6 to pass through. The threaded bar openings 20 are preferably shaped to have a larger opening area than the cross-sectional area of the threaded bars 6 passing through the threaded bar openings 20. The threaded bar openings 20 along a longitudinal direction of the fixation element 2 or fixation element parts 15 are elongate openings which may be described as stadium shaped. In the corners of the fixation element 2 or fixation element parts 15, the threaded bar openings 20 are elongate in two directions, resulting a circular opening being larger than the cross-sectional area of the threaded bars 6. Figs. 5A-C illustrates such threaded bar openings 20.

By having the threaded bars 6 arranged in the first flange 12 and proceeding upwardly an easy assembly is provided as the membrane 2, the fixation element 3 and, when used, the liner 4 can be placed on the threaded bars 6 to maintain their position relatively to the tunnel base 1 during assembly.

In preferred embodiments, the fixation element 2 is made from metal, such as stainless steel. However, composite materials, such as fibre reinforced polymer may also be used.

Preferred embodiments of a cheese pressing tunnel is designed for large scale production of cheese where a plurality, such as nine, twelve fifteen or even a higher number, of cheese moulds are arranged inside the tunnel and the membrane exerts a pressure on the lid pistons of the cheese moulds. In such as other embodiments, the tunnel base 1 may have a length being larger than 5m and smaller than 30m, a height being larger than 30cm and smaller than 75cm and a width being larger than 35cm and smaller than 125cm. In a preferred embodiment, the width of the tunnel is substantially 54.5cm., such as substantially 47.6cm In such preferred embodiments, the fixation element 3 may have a width being larger than 20cm and smaller than 30cm. In preferred embodiments, the width of the fixation element 3 is substantially 29mm.

When the pressing tunnel is long, e.g. longer than 5m, such as longer than 25m, it is preferred that the tunnel pressing tunnel is divided into sections along a longitudinal direction of the pressing tunnel. In such embodiments, a number of pressing tunnels 10, such a number of pressing tunnels as the one disclosed in Fig. 1 are placed neighbouring to each other with the openings 24 of the pressing tunnels 10 facing each other. In other embodiments, the cover 5 is divided into tunnel cover sections each being individually sealed by an individual membrane and having fixation elements 3 or fixation elements 15. Hence, the tunnel base 1 has a longer extension (in longitudinal direction) than the tunnel cover 5. By this, the length of the membrane 2 becomes more manageable. Such sectionalized pressing tunnel has the advantage that the pressure exerted onto the piston lids 22 can be varied in longitudinal direction of the pressing tunnel.

In preferred embodiments, the cheese pressing tunnel 10 comprises a conveyer configured for conveying moulds in a longitudinal direction of the cheese pressing tunnel. By this, cheese moulds are typically introduced into first end of the cheese tunnel and conveyed in a stepwise manner through the pressing tunnel and exits at a second end of the cheese tunnel. The conveying is made step-wise in the sense the mould are advanced a predefined distance inside the tunnel while the concave void is not pressurized to exert a pressure on the lid pistons of the cheese mould. In preferred embodiments, the pressure inside the concave void 9 is selected during advancement of the cheese moulds is selected so the membrane 2 is deflected slightly upward to allow passage of the moulds. When the moulds are not moving, the pressure inside the concave void 9 is increased to allow for the membrane to exert pressure onto the lid pistons of the moulds.

In order to control the pressure inside the concave void 9, preferred embodiments comprise a controllable pressurized air source, such as a controllable blower fans, and one or more pressure sensors arranged to determine the pressure inside the concave void 9. The controllable pressurized air source may be controllable by turning off and shutting off production of pressurized air at a preselected pressure level and/or may be controllable in a more continuous manner to deliver pressurized air at certain level(s). In preferred embodiments, pressurization of the concave void 9 is provided by one or more pressurization blower fans fluidic connected to the concave void 9 to feed air into the concave void 9, and a depressurization is provided by one or more suction blower fans fluidic connected to the concave void 9 to such out air from the concave void 9. It is preferred that the pressurization blower fan(s) and the suction blower fan(s) are dedicated to either feed air into or sucking air out from the concave void(s) 9. During operation, the controller shuts off or prevents air flow by one of the pressurization blower fans(s) or the suction blower fan(s) while the other fan(s) is in operation.

In preferred embodiments, the cheese pressing tunnel comprises a controller configured to receive a signal from the pressure sensor and control the pressurized air source to increase or decrease pressure inside the concave void if the pressure is not within a preselected pressure range. Such a preselected pressure range may be a pressure range for exerting a pressure on the lid piston 22 of the cheese moulds and/or a pressure range during which the cheese moulds are advanced inside the cheese pressing tunnel.

As detailed above, the invention also relates to a method of operating a cheese pressing tunnel according to the invention. The method of operating preferably comprises the consecutive steps of

- filling a cheese curd into a number of cheese mould 21 each having a piston lid 22,
- introducing the filled cheese mould 21 into the pressing tunnel 10, and
- pressurizing the concave void 9 so that the membrane 2 exerts a pressure onto the piston lids 22 to press the cheese curd in the cheese moulds 21 and allow liquid to run out from the cheese moulds 21.

LIST OF REFERENCE SYMBOLS USED

| 1 | Tunnel base |
|---|---|
| 2 | Membrane |
| 3 | Fixation element |
| 4 | Liner, preferably made of silicone rubber |
| 5 | Tunnel cover |
| 6 | Threaded bar |
| 7 | Nut |
| 8 | Upper opening |
| 9 | Concave void |
| 10 | Cheese pressing tunnel |
| 11 | Downward facing opening |
| 12 | First flange |
| 13 | Second flange |
| 14 | Rim |
| 15 | Fixation element part |
| 16 | Extension |
| 17 | Notch |
| 18 | Through going openings |
| 19 | Row of through going openings |
| 20 | Threaded bar openings |
| 21 | Mould |
| 22 | Lid piston |
| 23 | Bead-like shape |
| 24 | Opening in pressing tunnel |

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

**Claims**

1. A cheese pressing tunnel (10) comprising

    • a tunnel base (1) having an upper opening (8) and a tunnel cover (5) forming a concave void (9) having a downward facing opening (11), wherein said tunnel cover (5) is arranged on said tunnel base (1) with said downward facing opening facing in a direction of said tunnel base (1);
    • a flexible and fluid impermeable membrane (2) arranged to seal said concave void (9) so that a pressure difference between an interior of said concave void (9) and an exterior to said concave void (9) results in a deflection of said membrane (2);
    • a first flange (12) on said tunnel base, said first flange (12) encircles said upper opening (8)
    • a second flange (13) on said tunnel cover (5) mating said first flange (12), said second flange (13) encircles said downward facing opening (11),
    • a fixation element (3) arranged between said first and second flanges (12, 13);
    wherein
    • a rim (14) of said membrane (2) and said fixation element (3) are arranged in a stacked configuration between said first and second flanges (12, 13).

2. A cheese pressing tunnel (10) according to claim 1, wherein said membrane has a thickness between 2.0 and 4.0 mm, such as between 2.5 and 3.5 mm, and preferably has a thickness of substantially 3.0 mm.

3. A cheese pressing tunnel (10) according to claim 1 or 2, wherein said membrane is made from EPDM rubber.

4. A cheese pressing tunnel (10) according to any one of the preceding claims, wherein said fixation element (3) comprises a plurality of through going openings (18).

5. A cheese pressing tunnel (10) according to claim 4, wherein said through going openings (18) are arranged in at least two, such as three, rows (19) in a longitudinal direction of said fixation element (3).

6. A cheese pressing tunnel (10) according to claim 5, wherein said through going openings (18) of two of said rows (19) next to each other are arranged in a staggered configuration.

7. A cheese pressing tunnel (10) according to any one of the preceding claims, wherein said fixation element (3) has a width (w) and a length (l), wherein said width is smaller than said length.

8. A cheese pressing tunnel (10) according to any one of the preceding claims, wherein the fixation element (3) has a thickness between 0.25 and 0.75 mm, and preferably has a thickness of substantially 0.5 mm.

9. A cheese pressing tunnel (10) according to any one of the preceding claims, wherein said fixation element comprises a number of fixation element parts (15) connected to each other to provide said fixation element (3).

10. A cheese pressing tunnel (10) according to claim 8, wherein said fixation element parts (15) comprises mating extensions (16) and notches (17) provided at ends of the fixation elements parts (15) and is connected to each other by one of said extensions (16) of one of said fixation element part (15) is received by one of said notches of another of said fixation elements part (15).

11. A cheese pressing tunnel according to claim 10, wherein said mating extensions 16 and notches 17 engage with each other to provide an interlocking.

12. A cheese pressing tunnel (10) according to clam 10 or 11, wherein said notches (17) are keyhole shaped and said mating extensions (16) fit snugly within said keyholes.

13. A cheese pressing tunnel (10) according to any one of the preceding claims 4-12, wherein a total opening area of said through going openings (18) makes up more than 30% and less than 60% of a total face area of said fixation element (3).

14. A cheese pressing tunnel (10) according to any one of the preceding claims, wherein a flexible liner (4), preferably made from silicone rubber, is arranged in said stacked configuration at a position above said fixation element (3) and in abutment with said fixation element (3) and with said second flange (13).

15. A cheese pressing tunnel (10) according to claim 14, wherein the flexible liner (4) has a thickness of 0.5 mm and a width substantially equal to a width of the fixation element (3).

16. A cheese pressing tunnel (10) according to any one of the preceding claims, wherein said tunnel cover (5) is releasably fixed to said tunnel base (1) by a plurality of threaded bars (6).

17. A cheese pressing tunnel (10) according to claim 16, wherein said membrane (2), said fixation element (3) and, when dependant on claim 10, said liner (4) comprises threaded bar openings (20) to allow said threaded bars (6) to pass through.

18. A cheese pressing tunnel (10) according to any one of the preceding claims, wherein said fixation element (2) is made from metal, such as stainless steel.

19. A cheese pressing tunnel (10) according to any one of the preceding claims, wherein said tunnel base (1) has a length being larger than 5m and smaller than 30m, a height being larger than 30cm and smaller than 75cm and a width being larger than 35cm and smaller than 125cm, preferably said width of said tunnel is substantially 54.5cm, such as substantially 47.6cm.

20. A cheese pressing tunnel according to claim 19, wherein said fixation element (3) has a width being larger than 20cm and smaller than 30cm, preferably said width of said fixation element (3) is substantially 29mm.

21. A cheese pressing tunnel according to any one of the preceding claims, comprising a conveyer configured for conveying moulds in a longitudinal direction of said cheese pressing tunnel.

22. A cheese pressing tunnel according to any one of the preceding claims, comprising

   • a controllable pressurized air source, such as a controllable compressor,
   • one or more pressure sensors arranged to determine the pressure inside said concave void (9), and
• a controller configured to receive a signal from said pressure sensor and control said pressurized air source to increase or decrease pressure inside said concave void if the pressure is not within a preselected pressure range.

23. A method of operating a cheese pressing tunnel, comprising

• providing a cheese pressing tunnel (10) according to any one of the preceding claims,
• filling a cheese curd into a number of cheese mould (21) each having a piston lid (22),
• introducing said filled cheese mould (21) into said pressing tunnel (10), and
• pressurizing said concave void (9) so that said membrane (2) exerts a pressure onto said piston lids (22) to press said cheese curd in said cheese moulds (21) and allow liquid to run out from said cheese moulds (21).

Fig. 1

Fig. 2A

Fig. 2B

Fig. 3A

Fig. 3B

Fig. 4

Fig. 5A

Fig. 5B

Fig. 5C

Europäisches
Patentamt
European
Patent Office
Office européen
des brevets

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 439 228 A1 (TEBEL MASCHF BV [NL]) 31 July 1991 (1991-07-31) | 1-12, 14-22 | INV. A01J25/15 |
| A | * column 3 - column 7; figures 1-7 * | 13,23 | |
| | ----- | | |
| X | DE 23 46 339 A1 (FRIESLAND B V MASCHF) 24 April 1975 (1975-04-24) | 1-3,7-9, 19,20,23 | |
| A | * page 3 - page 4; figures 1,2 * | 4-6, 10-18, 21,22 | |
| | ----- | | |
| A | EP 0 566 520 A1 (GASBJERG KNUD [DK]) 20 October 1993 (1993-10-20) * column 2 - column 3; figures 1-3 * ----- | 1-23 | |

**TECHNICAL FIELDS SEARCHED (IPC)**

A01J

The present search report has been drawn up for all claims

| Place of search | Date of completion of the search | Examiner |
|---|---|---|
| The Hague | 21 February 2026 | Moeremans, Benoit |

EPO FORM 1503 03.82 (P04C01)

## ANNEX TO THE EUROPEAN SEARCH REPORT
## ON EUROPEAN PATENT APPLICATION NO.

EP 25 21 1719

This annex lists the patent family members relating to the patent documents cited in the above-mentioned European search report.
The members are as contained in the European Patent Office EDP file on
The European Patent Office is in no way liable for these particulars which are merely given for the purpose of information.

21-02-2026

| Patent document cited in search report | | Publication date | Patent family member(s) | | Publication date |
|---|---|---|---|---|---|
| EP 0439228 | A1 | 31-07-1991 | EP | 0439228 A1 | 31-07-1991 |
| | | | NL | 9000133 A | 16-08-1991 |
| DE 2346339 | A1 | 24-04-1975 | NONE | | |
| EP 0566520 | A1 | 20-10-1993 | AT | E155316 T1 | 15-08-1997 |
| | | | DE | 69312150 T2 | 05-02-1998 |
| | | | DK | 7292 A | 22-07-1993 |
| | | | EP | 0566520 A1 | 20-10-1993 |
| | | | ES | 2105188 T3 | 16-10-1997 |

EPO FORM P0459

For more details about this annex : see Official Journal of the European Patent Office, No. 12/82